# EUROPÄISCHE PATENTSCHRIFT

(11) **EP 1 904 358 B1**
(45) Veröffentlichungstag und Bekanntmachung des Hinweises auf die Patenterteilung: **21.03.2012**
(21) Anmeldenummer: 06761753.0
(22) Anmeldetag: 29.06.2006
(51) Int. Cl.: B62D 1/10, B62D 5/00

(54) **LENKEINRICHTUNG FÜR EINE ÜBERLAGERUNGSLENKUNG**
STEERING DEVICE FOR A SUPERPOSITION STEERING SYSTEM
SYSTEME DE DIRECTION POUR UNE DIRECTION A SUPERPOSITION

(30) Priorität: 20.07.2005 DE 102005034636
(43) Veröffentlichungstag der Anmeldung: 02.04.2008
(73) Patentinhaber: Takata-Petri AG, 63743 Aschaffenburg (DE)
(72) Erfinder: MARKFORT, Dieter, 13088 Berlin (DE)
(74) Vertreter: Baumgärtel, Gunnar
(86) Internationale Anmeldenummer: PCT/DE2006/001151
(87) Internationale Veröffentlichungsnummer: WO 2007/009420

(56) Entgegenhaltungen:
- DE-A1- 3 830 654
- DE-A1- 10 315 150
- US-A1- 2003 066 379

## Beschreibung

Die Erfindung betrifft eine Lenkeinrichtung für eine Überlagerungslenkung nach dem Oberbegriff des Anspruchs 1.

Kraftfahrzeuge sind heute in der Regel mit Servolenkungen ausgestattet. Ziel der Servolenkung ist es, den Lenkkraftbedarf, d.h., das vom Fahrer aufzubringende Drehmoment für eine Fahrtrichtungsänderung abzusenken. Bei bekannten Servolenkungen erfolgt dies in Abhängigkeit von der Motordrehzahl, da die Pumpe für das unterstützende Hydrauliksystem vom Fahrzeugmotor angetrieben wird. Weiterhin ist es bekannt, die Pumpe durch ansteuerbare Elektromotore anzutreiben, wodurch eine geschwindigkeitsabhängige Lenkkraftunterstützung ermöglicht wird. Dabei nimmt mit zunehmender Geschwindigkeit die unterstützende Wirkung einer solchen Servolenkung ab. Der Fahrer muss also bei hohen Geschwindigkeiten für eine Änderung des Lenkausschlages ein größeres Moment über das Lenkrad einleiten als bei niedrigen Geschwindigkeiten. Bei derartigen Systemen wird das Eingangsmoment den jeweiligen Bedingungen angepasst, d.h., geregelt.

Überlagerungslenkungen sind dadurch gekennzeichnet, dass dem vom Fahrer eingegebenen Lenkwinkel ein weiterer Winkel durch einen Aktuator überlagert werden kann. So ist aus der DE 101 60 313 A1 ein Überlagerungsgetriebe für eine Überlagerungslenkung bekannt. Dieses Überlagerungsgetriebe ist zwischen einer Eingangswelle, die mit dem Lenkrad verbunden ist und einer Ausgangswelle, die mit einem Lenkgetriebe verbunden ist, angeordnet. Diesem Überlagerungsgetriebe ist ein Verstellmotor zugeordnet, die zusammen den Aktuator bilden. Dieser Aktuator weist den Nachteil auf, dass er zwischen einer Eingangs- und einer Ausgangswelle angeordnet ist, so dass im Bereich der Lenksäule zusätzlicher Bauraum benötigt wird und damit eine spezielle Lenksäule erforderlich ist.

Des Weiteren ist aus der gattungsbildenden DE 103 15 150 A1 eine Lenkeinrichtung bekannt, die einen Motor aufweist, durch den eine Lenkbewegung einer Lenkwelle erzeugbar ist, die einer über ein Lenkhandrad erzeugten Lenkbewegung der Lenkwelle überlagerbar ist.

Der Erfindung liegt die Aufgabe zugrunde, eine Überlagerungslenkung zu schaffen, die keinen zusätzlichen Bauraum in der Lenksäule erfordert. Weiterhin soll eine zusätzliche Baugruppe installierbar sein, mit deren Hilfe wahlweise autonomes Fahren möglich sein soll.

Erfindungsgemäß wird das gemäß den Merkmalen des Anspruchs 1 erreicht.

Bei einer Lenkeinrichtung für eine Überlagerungslenkung, unter Verwendung mindestens eines Aktuators für die Überlagerungslenkung ist dieser im Lenkrad angeordnet. Dadurch ergibt sich der Vorteil, dass für die Überlagerungslenkung keine besondere Lenksäule erforderlich ist, in der bei den Lenkeinrichtungen des Standes der Technik die Baugruppe für die Überlagerungslenkung zusätzlich eingebaut ist. Die erfindungsgemäße Anordnung ist also leichter in vorhandene Lenksysteme einbindbar, da eine herkömmliche Lenksäule mit Servolenkung verwendet werden kann.

Der Aktuator weist ein Schneckenradgetriebe und mindestens einen Motor für den Antrieb eines Schneckenrades auf. In einer Ausführungsform weist das Schneckenradgetriebe ein großes Schneckenrad auf, das koaxial mit einer Lenkwelle verbunden ist, und dem großen Schneckenrad sind zwei kleinere Schneckenräder zugeordnet, die mit je einem Elektromotor verbunden sind.

Es ist zweckmäßig, dass das große Schneckenrad für die Verbindung mit der Lenkwelle eine Hülse aufweist, die über die Lenkwelle greift, wobei die drehsichere Verbindung über einen Lenkradzapfen erfolgt. Die Motoren sind vorzugsweise zumindest teilweise in den Speichen des Lenkrades angeordnet.

Weiterhin ist es zweckmäßig, dass die Steigung des Schneckengetriebes eine solche Größe aufweist, dass Selbsthemmung vorhanden ist.

Zweckmäßig ist es ebenfalls, dass eine von der Geschwindigkeit des Fahrzeuges abhängige Ansteuerung der Motoren vorgesehen ist, wobei bei hoher Geschwindigkeit der Lenkausschlag reduziert und bei geringer Geschwindigkeit der Lenkausschlag erhöht wird.

Unter Lenkausschlag wird die Winkeländerung der gelenkten Räder bei einer Fahrtrichtungsänderung verstanden.

In einer bevorzugten Ausführungsform ist dem Aktuator für die Überlagerungslenkung eine Servolenkung mit regelbarem Eingangsmoment nachgeordnet, das auf die Lenkwinkeldifferenz der Überlagerungslenkung reagiert, Insbesondere dadurch wird ein gewohntes Lenkgefühl erzeugt. Dabei ist eine Regelung vorgesehen, die das Eingangsmoment der Servolenkung bei Zugabe von Lenkwinkeln verringert und bei Subtraktion von Lenkwinkeln vergrößert. Unter Lenkwinkel wird der Drehwinkel der Lenkwelle verstanden. Je nach Ansteuerung der Überlagerungslenkung kann dieser gleich, größer oder kleiner als die vom Fahrer am Lenkrad eingeleitete Winkeländerung sein.

In einer Ausführungsform ist eine kraft- form- oder reibschlüssige Verbindung zwischen dem Lenkrad und einem fahrzeugfesten Bauteil zur Erzielung einer Lenkradfixierung vorgesehen.

Es ist zweckmäßig, dass der Aktuator oberhalb eines Lenkradbodens angeordnet ist und dass zwischen der Unterseite des Lenkradbodens und einer Lenkradverkleidung eine elektromagnetische Reibkupplung als Lenkradfixierung angeordnet ist.

In einer bevorzugten Ausführungsform weist die Reibkupplung ein ringförmiges Kupplungsteil auf, das mittels Führungsbolzen in einem nach innen ragenden Abschnitt der Lenkwellenverkleidung geführt ist.

In einer weiteren Ausführungsform ist mindestens ein mit einem fahrzeugfesten Bauteil, z.B. mit der Lenksäulen-Aufnahme verbundener zusätzlicher, programmierbarer Servo-Aktuator zwischen der im Lenkrad befindlichen Überlagerungslenkung und der Servolenkung vorgesehen. Der programmierbare Servo-Aktuator greift z.B. über Zahnradgetriebe direkt an der Lenkwelle an. Somit steuert der programmierbare Servo-Aktuator das Lenkgetriebe über die obere Lenkwelle und die nachfolgende Servolenkung direkt an. Über diesen Servo-Aktuator lässt sich das Fahrzeug autonom steuern. So sind mit diesem Servo-Aktuator Assistenzfunktionen realisierbar, die in das Lenkgeschehen eingreifen, z.B. automatische Spurhaltung oder automatisches Einparken. Da der Servo-Aktuator vor der Servo-Lenkung liegt, kann der Servo-Aktuator die im Lenkrad befindliche Überlagerungslenkung entlasten, so dass eine kleinerer Aktuator für die Überlagerungslenkung eingebaut werden kann.

In einer weiteren Ausgestaltung ist vorgesehen dass für die Einstellung des Abstandes zwischen den Achsen des Schneckenrades und der Schnecke des Aktuators der Überlagerungslenkung und/oder für das Einbringen von Vibrationen dem Gehäuse, in dem das Schneckenrad und die Schnecke gelagert sind, mindestens ein Stellelement zugeordnet ist. Als Stellelement kann z.B. ein Piezo-Aktuator vorgesehen sein.

Dadurch ist der Wirkungsgrad des Getriebes einstellbar.

So kann der Piezo-Aktuator das Getriebegehäuse, in dem die Schneckenräder gelagert sind, auseinander drücken. Dadurch vergrößert sich der Achsabstand, wodurch das Spiel zwischen den Schneckenrädern ebenfalls vergrößert wird. Dadurch verringert sich das Losbrechmoment des Getriebes und das Getriebe läuft leichter an. Statt dessen oder zusätzlich kann das Losbrechmoment durch die vom Piezo-Aktuator eingebrachte Vibration verringert werden.

Mittels des Piezo-Aktuators kann das Gehäuse auch zusammengedrückt werden. Dadurch verringert sich der Achsabstand und das Spiel zwischen den Schneckenrädern wird vollständig aufgehoben, d.h., das Getriebe verspannt sich und verfügt über eine sichere Selbsthemmung.

Schließlich kann der Piezo-Aktuator die Schneckenräder für einen dynamischen Betrieb auf einen optimalen Abstand halten. Der Achsabstand verbleibt im günstigen Fall in dem Abstand, den das Getriebe bei spannungsfreiem Zustand des Aktuators einnimmt. Hierbei läuft das Getriebe mit optimalem Spiel und optimaler Reibung.

Die Erfindung soll in einem Ausführungsbeispiel anhand von Zeichnungen erläutert werden. Es zeigen:
- Fig. 1: eine perspektivische Ansicht des erfindungsgemäßen Lenkrades mit Aktuator;
- Fig. 2: eine perspektivische Ansicht des Aktuators aus Fig. 1;
- Fig. 3: einen Schnitt durch das Lenkrad nach Fig. 1;
- Fig. 4: einen Schnitt durch ein erfindungsgemäßes Lenkrad mit elektromagnetischer Reibkupplung als Lenkradfixierung;
- Fig. 5: die Einzelheit E der Fig. 4 mit offener Kupplung;
- Fig. 6: die Einzelheit E der Fig. 4 mit geschlossener Kupplung;
- Fig. 7: eine schematische Darstellung des gesamten Lenksystems.
- Fig. 8: eine Ausführungsform mit einem Aktuator in einem dreispeichigen Lenkrad, von oben gesehen;
- Fig. 9: eine perspektivische Ansicht von vorn der Ausführungsform nach Fig. 8;
- Fig.10: eine perspektivische Ansicht von hinten der Ausführungsform nach Fig. 8;
- Fig.. 11: eine Seitenansicht der Ausführungsform nach Fig. 8;
- Fig. 12: eine Ausführungsform, bei der der Abstand zwischen den Achsen der Schneckenräder des Aktuators einstellbar ist, von oben gesehen;
- Fig. 13: die Ausführungsform der Fig. 12 mit offenem Getriebegehäuse;
- Fig. 14: eine perspektivische Ansicht der Ausführungsform nach Fig. 12;
- Fig. 15: eine Seitenansicht der Ausführungsform nach Fig. 12.

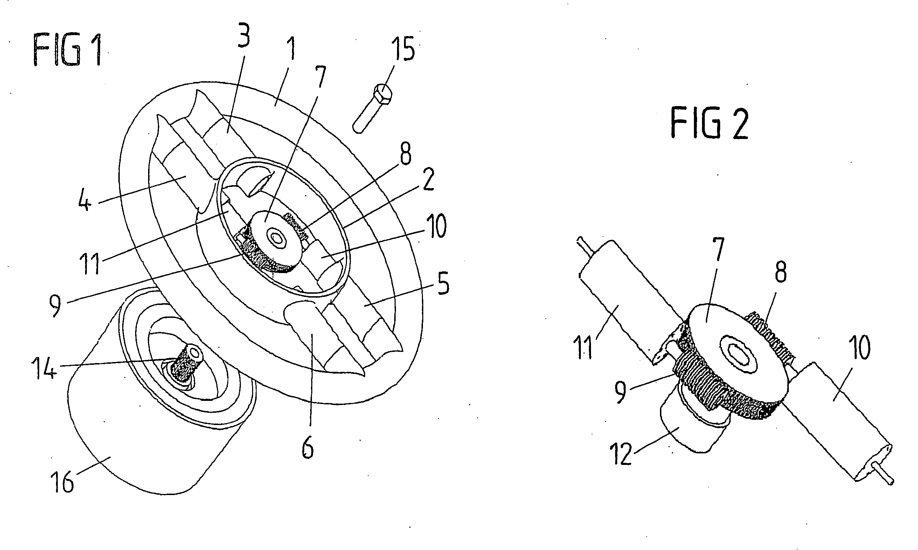

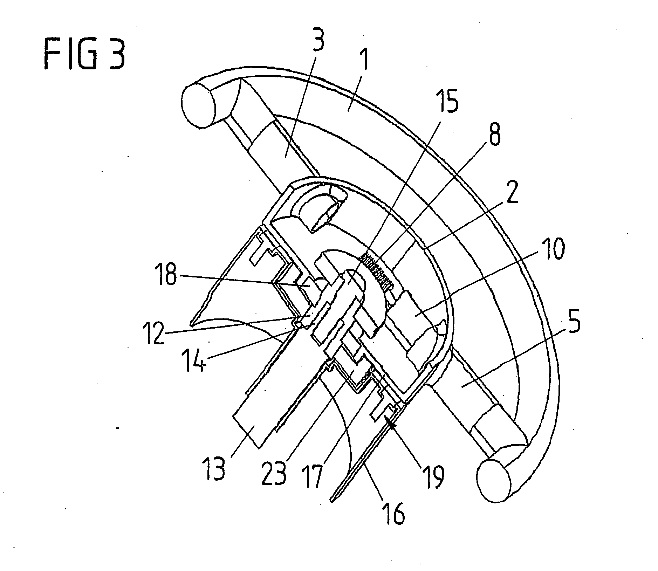

In der Fig. 1 ist ein Lenkrad dargestellt, das einen Lenkradkranz 1 und einen Lenkradtopf 2 aufweist, der aufgeschnitten dargestellt ist, um einen Aktuator sichtbar zu machen. Der Lenkradkranz 1 und der Lenkradtopf 2 sind durch Speichen 3, 4, 5, 6 miteinander verbunden. Der Aktuator weist ein großes Schneckenrad 7, zwei kleine Schneckenräder 8, 9 und diesen zugeordnete Elektromotoren 10 ,11 auf. Der Elektromotor 10 ist Bestandteil der Speiche 5, während der Elektromotor 11 Bestandteil der Speiche 4 ist. Das große Schneckenrad 7 weist eine Hülse 12 auf (Fig. 2), mittels der das Lenkrad auf einer Lenkwelle 13 (Fig. 3) befestigbar ist. Die Hülse 12 greift über einen Lenkradzapfen 14 und beide werden mittels einer Schraube 15 miteinander verbunden.

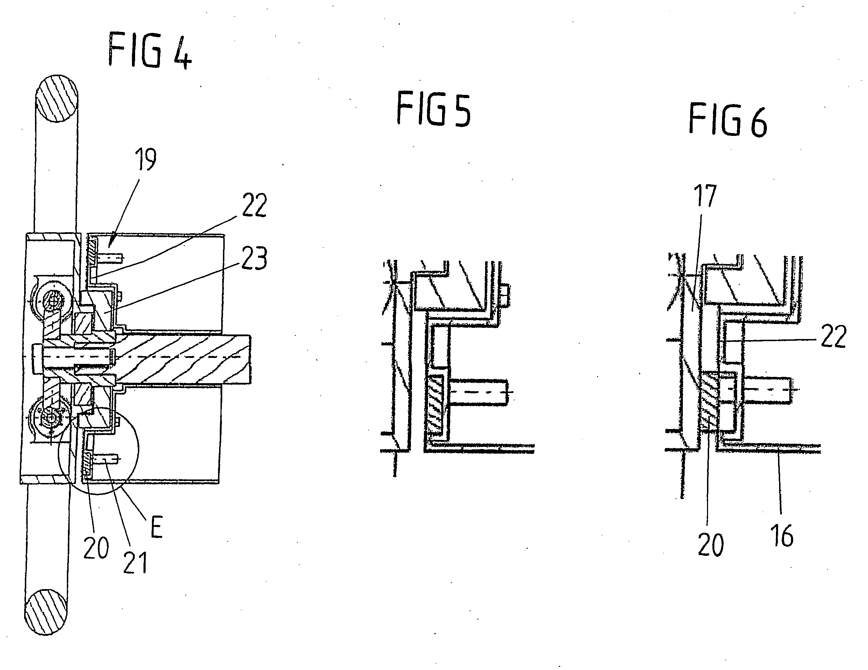

Aus der Fig. 3 sind weitere Details der erfindungsgemäßen Anordnung ersichtlich. Der Lenkradtopf 2 weist einen Lenkradboden 17 auf, in dem ein Kugellager 18 für die Lagerung der Hülse 12 vorgesehen ist. Die Lenkwelle 13 ist von einer Lenkwellenverkleidung 16 umgeben, an der auf der dem Lenkradboden 17 zugekehrten Seite eine elektromagnetische Reibkupplung 19 als Lenkradfixierung angeordnet ist. Diese ist in den Figuren 4 bis 6 detailliert dargestellt. Weiterhin ist im oberen Bereich der Lenkwellenverkleidung 16 ein Lenkwinkelsensor 23 vorgesehen.

Aus der Fig. 4 ist ersichtlich, dass die Reibkupplung 19 ein ringförmiges Kupplungsteil 20 aufweist, das mittels Führungsbolzen 21 in einem nach innen ragenden Abschnitt 22 der Lenkwellenverkleidung 16 geführt ist. Mittels dieser Reibkupplung 19 besteht die Möglichkeit des autonomen Fahrens bzw. ESP-Eingriffs in die Lenkung. Die Reibkupplung bewirkt eine Lenkradfixierung, die vom Fahrer zu überwinden ist. Wenn autonom gelenkt werden soll, so fährt das Kupplungsteil 20 aus dem Abschnitt 22 der Lenkwellenverkleidung 16 aus und legt sich außen an den Lenkradboden 17 an, wie es in Fig. 6 dargestellt ist. Es besteht nun ein Reibschluss zwischen dem Lenkradboden 17 und damit dem Lenkrad und der Lenkwellenverkleidung 26. Die notwendigen Lenkausschläge werden nun durch die Überlagerungslenkung getätigt.

Wenn der Fahrer plötzlich einen anderen Lenkwinkel einschlagen will, erkennt das System die einsetzende Reibung bzw. Winkeldifferenz oder das anliegende Lenkmoment und fährt die Kupplung zurück, wie es in Fig. 5 dargestellt ist.

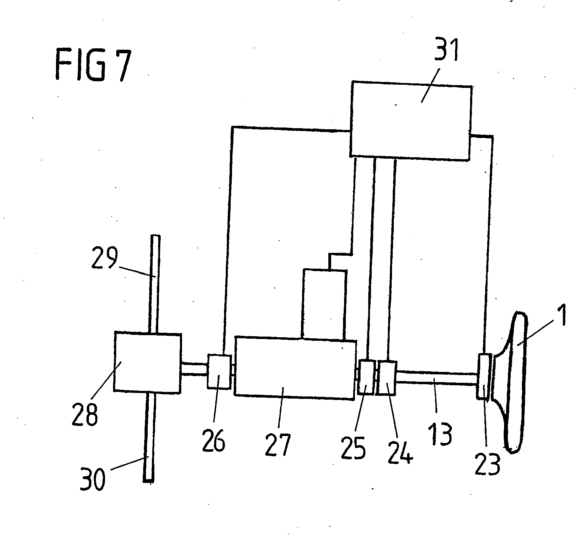

In der Fig. 7 ist das gesamte Lenksystem dargestellt, in dem dieses Lenkrad arbeitet. Das Lenkrad mit dem Lenkwinkelsensor 23 ist auf der Lenkwelle 13 befestigt, auf der ein weiterer Lenkwinkelsensor 24, sowie Sensoren 25, 26 für das Lenkmoment vorgesehen sind. Zwischen den beiden letztgenannten Sensoren ist ein Servomotor 27 angeordnet. Am Ende der Lenkwelle 13 sind in bekannter Weise ein Lenkgetriebe 28 mit Antriebswellen 29, 30 vorgesehen. Den Lenkwinkelsensoren 23, 24, den Sensoren 25, 26 für das Lenkmoment sowie dem Servomotor 27 ist eine Steuerelektronik 31 mit Software zugeordnet.

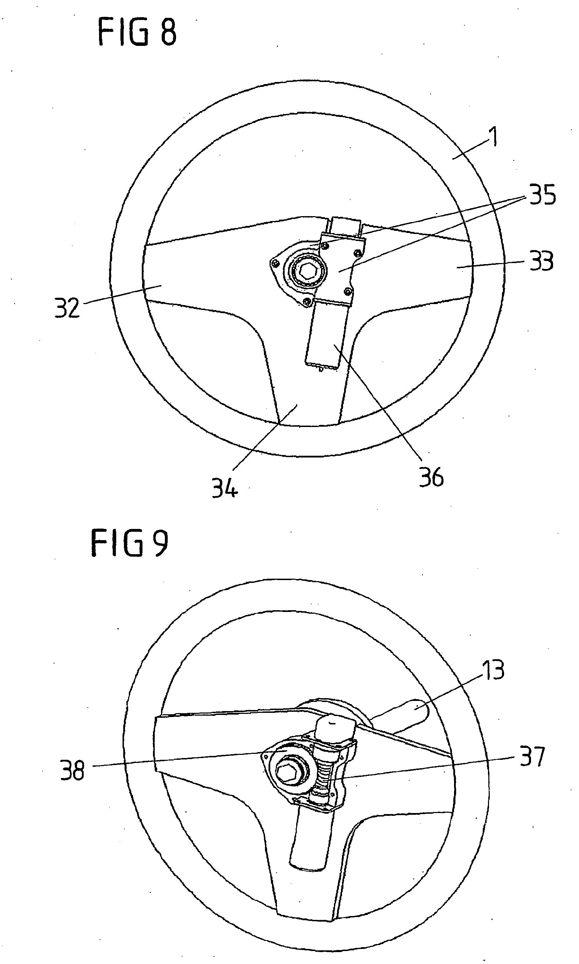

Bei der Ausführungsform der Fig. 8 ist ein Lenkrad mit einem Lenkradkranz 1 und drei Speichen 32, 33, 34 vorgesehen. Der Aktuator bestehend aus einem Getriebe, das in einem Getriebegehäuse 35 angeordnet ist, und aus einem Elektromotor 36, ist in der Mitte des Lenkrades angeordnet. Wie aus der Fig. 9 ersichtlich ist, weist das Getriebe eine Schnecke 37 und ein Schneckenrad 38 auf, das mit der Lenkwelle 13 verbunden ist.

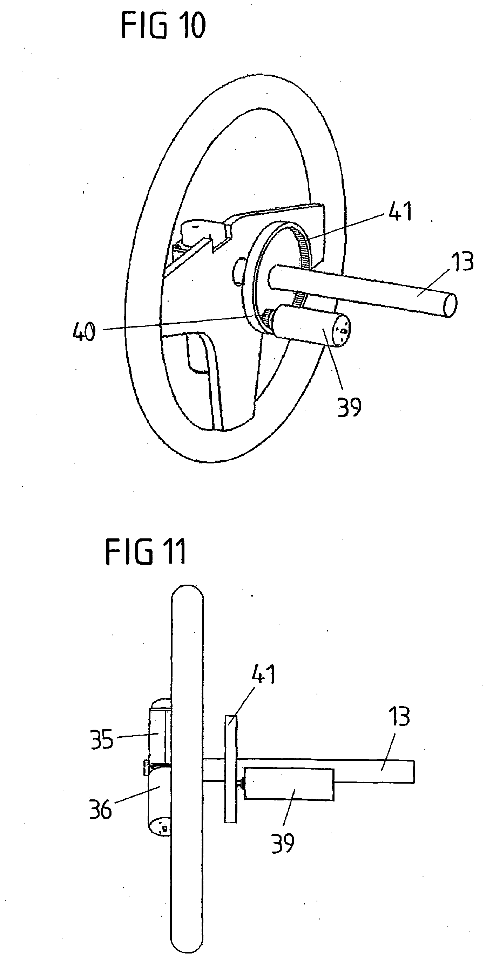

In der Ansicht der Fig. 10, die die Ausführungsform der Fig. 8 perspektivisch von hinten zeigt, ist ein zweiter, sogenannter Servo-Aktuator mit einem Elektromotor 39 und zugeordnetem Antriebsritzel 40 erkennbar. Dieser Servo-Aktuator ist im Gegensatz zum erstgenannten Aktuator fahrzeugfest im Bereich der nicht dargestellten Lenksäule angeordnet. Das Antriebsritzel greift in einen Zahnkranz 41 ein, der eine Innenverzahnung aufweist und drehfest mit der Lenkwelle 13 verbunden ist.

Aus der Seitenansicht der Fig. 11 ist nochmals die Zuordnung der wesentlichen Bauteile der beiden Aktuatoren erkennbar. Da der Servo-Aktuator vor der nicht dargestellten Servo-Lenkung liegt, kann der Servo-Aktuator die im Lenkrad befindliche Überlagerungslenkung entlasten, so dass ein kleinerer Aktuator 36, 37, 38 für die Überlagerungslenkung eingebaut werden kann.

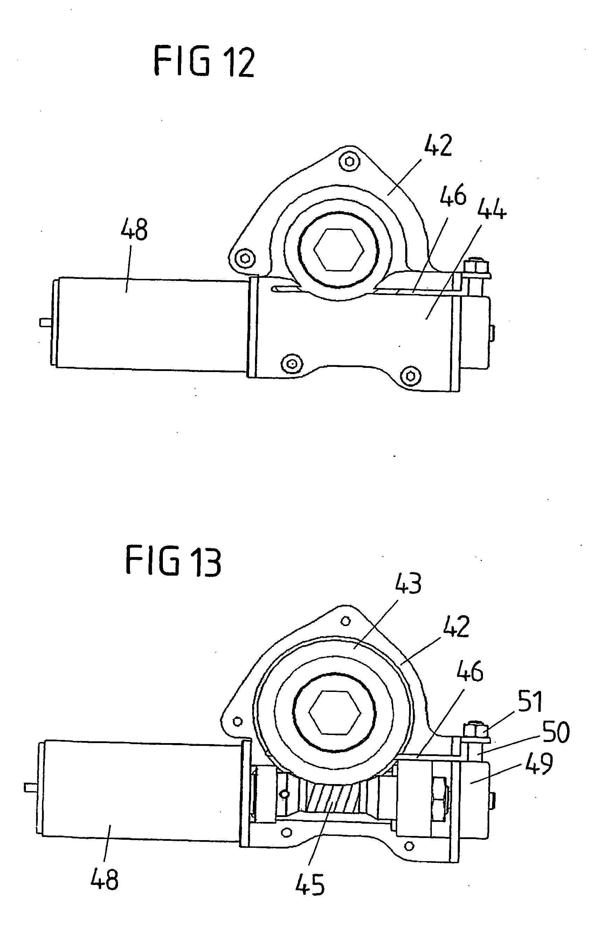

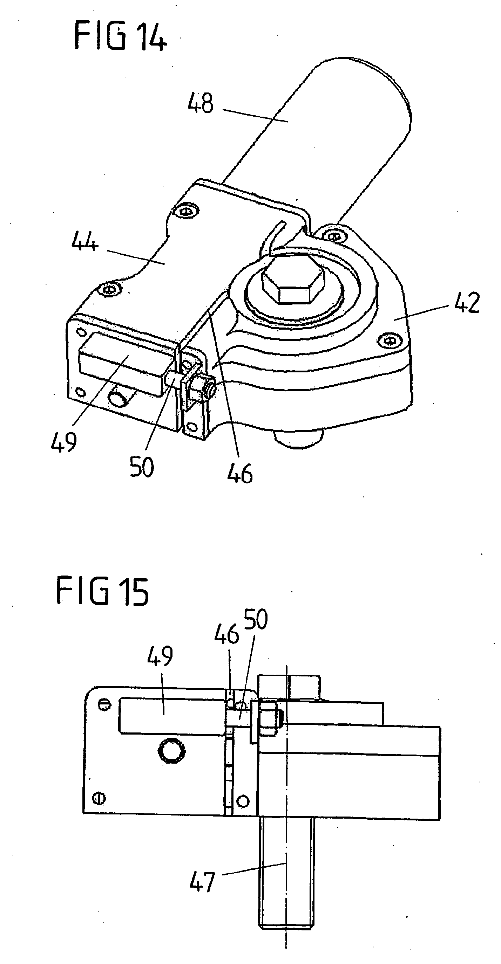

Bei der Ausführungsform eines lenkradintegrierten Aktuators nach Fig. 12 weist das in dieser Figur geschlossen dargestellte Getriebegehäuse zwei Bereiche auf. So ist ein Getriebegehäusebereich 42 für ein Schneckenrad 43 (Fig. 13) und ein Getriebegehäusebereich 44 für eine Schnecke 45 (Fig. 13) vorhanden. Die Getriebegehäusebereiche 42, 44 sind durch einen Spalt 46, der das Getriebegehäuse in einer Richtung parallel zur Lenkwellenachse 47 (Fig. 15) vollständig durchdringt, getrennt. Der Getriebegehäusebereich 42 für das Schneckenrad 43 ist fest mit dem nicht dargestellten Lenkrad verbunden. Der Schnecke 45 ist ein Elektromotor 48 zugeordnet.

An der dem Elektromotor 48 abgewandten Stirnseite des Getriebegehäuses ist ein ansteuerbares, den Spalt 46 überbrückendes, Stellelement 49, z. B. ein Piezo-Aktuator, angeordnet. Durch die Aktivierung des Stellelementes 49 kann die Breite des Spaltes 46 in einer durch das Schneckenrad aufgespannten Ebene zwischen den beiden Getriebegehäusebereichen 42, 44 und damit das Spiel zwischen dem Schneckenrad 43 und der Schnecke 45 eingestellt werden. Hierzu erstreckt sich vom Stellelement 49 aus, das am Getriebegehäusebereich 44 befestigt ist, ein Stellglied 50 in Richtung des Getriebegehäusebereiches 42 und ist dort mit diesem z.B. mittels einer Schraubverbindung 51 fest verbunden. Durch Verschiebung des Stellgliedes 50 im Stellelement 49 bzw. bei Verwendung eines Piezo-Aktuators durch Längenänderung des Stellgliedes 50 kann der Spalt 46 in seiner Breite verändert werden,

In den Figuren 14 und 15 sind die wesentlichen Elemente der Ausführungsform der Fig. 12 nochmals aus anderen Blickrichtungen dargestellt.

## Patentansprüche

1. Lenkeinrichtung für eine Überlagerungslenkung, mit einer Lenkwelle, einem an der Lenkwelle befestigten Lenkrad und einem im Lenkrad angeordneten Aktuator, wobei der Aktuator (7-11) für die Überlagerungslenkung für die Änderung des Drehwinkels der Lenkwelle vorgesehen ist,
**dadurch gekennzeichnet, dass**
der Aktuator ein Schneckenradgetriebe (7-9) und mindestens einen Motor (10, 11) für den Antrieb eines Schneckenrades (8, 9) aufweist.

2. Lenkeinrichtung nach Anspruch 1, **dadurch gekennzeichnet, dass** das Schneckenradgetriebe (7-9) ein großes Schneckenrad (7) aufweist, das koaxial mit einer Lenkwelle (13) verbunden ist, und dass dem großen Schneckenrad (7) zwei kleinere Schneckenräder (8, 9) zugeordnet sind, die mit je einem Elektromotor (10, 11) verbunden sind.

3. Lenkeinrichtung nach Anspruch 2, **dadurch gekennzeichnet, dass** das große Schneckenrad (7) für die Verbindung mit der Lenkwelle (13) eine Hülse (12) aufweist, die über die Lenkwelle (13) greift, wobei die drehsichere Verbindung über einen Lenkradzapfen (14) erfolgt.

4. Lenkeinrichtung nach mindestens einem der vorhergehenden Ansprüche**dadurch gekennzeichnet, dass** die Motoren (10, 11) zumindest teilweise in den Speichen (4, 5) des Lenkrades (1, 2) angeordnet sind.

5. Lenkeinrichtung nach mindestens einem der vorhergehenden Ansprüche, **dadurch gekennzeichnet, dass** die Steigung des Schneckengetriebes (7-9) eine solche Größe aufweist, dass Selbsthemmung vorhanden ist.

6. Lenkeinrichtung nach mindestens einem der vorhergehenden Ansprüche, **dadurch gekennzeichnet, dass** eine von der Geschwindigkeit des Fahrzeuges abhängige Ansteuerung der Motoren (10, 11) vorgesehen ist, wobei bei hoher Geschwindigkeit der Lenkausschlag reduziert und bei geringer Geschwindigkeit der Lenkausschlag erhöht wird.

7. Lenkeinrichtung nach mindestens einem der vorhergehenden Ansprüche, **dadurch gekennzeichnet, dass** dem Aktuator (7-11) für die Überlagerungslenkung eine Servolenkung (27) mit regelbarem Eingangsmoment nachgeordnet ist, das auf die Lenkwinkeldifferenz der Überlagerungslenkung reagiert.

8. Lenkeinrichtung nach Anspruch 7, **dadurch gekennzeichnet, dass** eine Regelung vorgesehen ist, die das Eingangsmoment der Servolenkung (27) bei Zugabe von Lenkwinkeln verringert und bei Subtraktion von Lenkwinkeln vergrößert.

9. Lenkeinrichtung nach mindestens einem der vorhergehenden Ansprüche, **dadurch gekennzeichnet, dass** eine kraft-, form- oder reibschlüssige Verbindung (19) zwischen dem Lenkrad (17) und einem fahrzeugfesten Bauteil (16) zur Erzielung einer Lenkradfixierung vorgesehen ist.

10. Lenkreinrichtung nach Anspruch 9, **dadurch gekennzeichnet, dass** der Aktuator (7-11) oberhalb eines Lenkradbodens (17) angeordnet ist und dass zwischen der Unterseite des Lenkradbodens (17) und einer Lenkwellenverkleidung (16) eine elektromagnetische Reibkupplung (19) als Lenkradfixierung angeordnet ist.

11. Lenkeinrichtung nach Anspruch 10, **dadurch gekennzeichnet, dass** die Reibkupplung (19) ein ringförmiges Kupplungsteil (20) aufweist, das mittels Führungsbolzen (21) in einem nach innen ragenden Abschnitt (22) der Lenkwellenverkleidung (16) geführt ist.

12. Lenkeinrichtung nach mindestens einem der vorhergehenden Ansprüche, **dadurch gekennzeichnet, dass** mindestens ein mit einem fahrzeugfesten Bauteil verbundener zusätzlicher, programmierbarer Servo-Aktuator (39, 40) zwischen der im Lenkrad befindlichen Überlagerungslenkung (36, 37, 38) und der Servolenkung vorgesehen ist.

13. Lenkeinrichtung nach Anspruch 12, **dadurch gekennzeichnet, dass** der zusätzliche Servo-Aktuator (39, 40) mit der Lenksäulen-Aufnahme verbunden ist.

14. Lenkreinrichtung nach mindestens einem der Ansprüche 1 - 8, **dadurch gekennzeichnet, dass** für die Einstellung des Abstandes zwischen den Achsen des Schneckenrades (43) und der Schnecke (45) des Aktuators der Überlagerungslenkung und/oder für das Einbringen von Vibrationen dem Gehäuse (42, 44), in dem das Schneckenrad (43) und die Schnecke (45) gelagert sind, mindestens ein Stellelement (49) zugeordnet ist.

15. Lenkeinrichtung nach Anspruch 14, **dadurch gekennzeichnet, dass** als Stellelement (49) ein Piezo-Aktuator vorgesehen ist.

## Claims

1. A steering device for a superposition steering system, comprising a steering shaft, a steering wheel fastened to the steering shaft and an actuator arranged in the steering wheel, wherein the actuator (7-11) for the superposition steering system is provided for changing the steering angle of the steering shaft,
**characterized in that**
the actuator has a worm gear mechanism (7-9) and at least one motor (10, 11) for driving a worm gear (8, 9).

2. The steering device as claimed in claim 1, **characterized in that** the worm gear mechanism (7-9) has a large worm gear (7) which is connected coaxially to a steering shaft (13), and **in that** two smaller worm gears (8, 9) which are connected in each case to one electric motor (10, 11) are assigned to the large worm gear (7).

3. The steering device as claimed in claim 2, **characterized in that** the large worm gear (7) has a sleeve (12) which engages over the steering shaft (13) for connection to the steering shaft (13), the rotationally secure connection being effected via a steering wheel journal (14).

4. The steering device as claimed in at least one of the preceding claims, **characterized in that** the motors (10, 11) are arranged at least partially in the spokes (4, 5) of the steering wheel (1, 2).

5. The steering device as claimed in at least one of the preceding claims, **characterized in that** the lead of the worm gear mechanism (7-9) is of sufficient magnitude that there is self locking.

6. The steering device as claimed in at least one of the preceding claims, **characterized in that** activation of the motors (10, 11) which is dependent on the speed of the vehicle is provided, the steering lock being reduced at high speed and the steering lock being increased at low speed.

7. The steering device as claimed in at least one of the preceding claims, **characterized in that** a power steering system (27) having a controllable input moment which reacts to the steering angle difference of the superposition steering system is arranged after the actuator (7-11) for the superposition steering system.

8. The steering device as claimed in claim 7, **characterized in that** regulation is provided which reduces the input moment of the power steering system (27) if steering angles are added and increases it if steering angles are subtracted.

9. The steering device as claimed in at least one of the preceding claims, **characterized in that** a non-positive, positively locking or frictional connection (19) is provided between the steering wheel (17) and a component (16) which is fixed to the vehicle, in order to fix the steering wheel.

10. The steering device as claimed in claim 9, **characterized in that** the actuator (7-11) is arranged above a steering wheel base (17), and **in that** an electromagnetic friction clutch (19) is arranged as steering wheel fixing means between the underside of the steering wheel base (17) and a steering shaft casing (16).

11. The steering device as claimed in claim 10, **characterized in that** the friction clutch (19) has an annular clutch part (20) which is guided by means of guide pins (21) in an inwardly protruding section (22) of the steering shaft casing (16).

12. The steering device as claimed in at least one of the preceding claims, **characterized in that** at least one additional, programmable servoactuator (39, 40) which is connected to a component which is fixed to the vehicle is provided between the superposition steering system (36, 37, 38) which is situated in the steering wheel and the power steering system.

13. The steering device as claimed in claim 12, **characterized in that** the additional servoactuator (39, 40) is connected to the steering column receptacle.

14. The steering device as claimed in at least one of claims 1 to 8, **characterized in that** at least one actuating element (49) is assigned to the housing (42, 44), in which the worm gear (43) and the worm (45) are mounted, for setting the spacing between the axes of the worm gear (43) and the worm (45) of the actuator of the superposition steering system and/or for introducing vibrations.

15. The steering device as claimed in claim 14, **characterized in that** a piezoelectric actuator is provided as actuating element (49).

## Revendications

1. Système de direction pour une direction à superposition, comprenant un arbre de direction, un volant fixé sur l'arbre de direction et un actionneur agencé dans le volant, ledit actionneur (7-11) étant prévu pour la direction à superposition pour faire varier l'angle de rotation de l'arbre de direction,
**caractérisé en ce que**
l'actionneur est un mécanisme à vis sans fin (7-9) et comprend au moins un moteur (10, 11) pour l'entraînement d'une vis sans fin (8, 9).

2. Système de direction selon la revendication 1, **caractérisé en ce que** le mécanisme à vis sans fine (7-9) comprend une vis sans fin de grande taille (7), qui est relié coaxialement à un arbre d'entraînement (13), et **en ce que** deux vis sans fin (8, 9) sont associées à la vis sans fin (7) de grande taille, lesquelles sont chacune reliées à un moteur électrique (10,11).

3. Système de direction selon la revendication 2, **caractérisé en ce que** la vis sans fin de grande taille (7) comprend, pour la liaison avec l'arbre de direction (13), une douille (12) qui s'engage sur l'arbre de direction (13), et la liaison antirotation a lieu au moyen d'un tenon (14) du volant de direction.

4. Système de direction selon l'une au moins des revendications précédentes, **caractérisé en ce que** les moteurs (10, 11) sont agencés au moins partiellement dans les rayons (4, 5) du volant (1, 2).

5. Système de direction selon l'une au moins des revendications précédentes, **caractérisé en ce que** le pas du mécanisme à vis sans fin (7-9) présente une valeur telle qu'il se produit un autocoincement.

6. Système de direction selon l'une au moins des revendications précédentes, **caractérisé en ce qu'**il est prévu un pilotage des moteurs (10, 11) en dépendance de la vitesse du véhicule, tel que le débattement de direction est réduit à haute vitesse et que le débattement de direction est augmenté à faible vitesse.

7. Système de direction selon l'une au moins des revendications précédentes, **caractérisé en ce que**, pour la direction à superposition, un système de direction assistée (27) avec couple d'entrée réglable, est disposé en aval de l'actionneur (7-11) et qui réagit à la différence d'angle de direction de la direction à superposition.

8. Système de direction selon la revendication 7, **caractérisé en ce qu'**il est prévu une régulation qui diminue le couple d'entrée de la direction assistée (27) lorsqu'on ajoute des angles de direction et qui le diminue lorsqu'on soustrait des angles de direction.

9. Système de direction selon l'une au moins des revendications précédentes, **caractérisé en ce qu'**il est prévu une liaison à coopération de forces, à coopération de formes ou à coopération de friction (19) entre le volant (17) est un composant (16) solidaire du véhicule pour obtenir une fixation du volant.

10. Système de direction selon la revendication 9, **caractérisé en ce que** l'actionneur (7-11) est agencé au-dessus d'un fond (17) du volant, et **en ce qu'**un accouplement électromagnétique à friction (19) est agencé, à titre de fixation pour le volant, entre la face inférieure du fond (17) du volant et un habillage (16) de l'arbre de direction.

11. Système de direction selon la revendication 10, **caractérisé en ce que** l'accouplement à friction (19) comprend une pièce d'accouplement (20) de forme annulaire, qui est guidée au moyen de goujon de guidage (21) dans un tronçon (22), dirigé vers l'intérieur, de l'habillage (16) de l'arbre de direction.

12. Système de direction selon l'une au moins des revendications précédentes, **caractérisé en ce qu'**il est prévu au moins un servo-actionneur programmable (19, 40) additionnel relié à un composant solidaire du véhicule, entre la direction à superposition (36, 37, 38) qui se trouve dans le volant et la direction assistée.

13. Système de direction selon la revendication 12, **caractérisé en ce que** le servo-actionneur additionnel (39, 40) est relié au logement de la colonne de direction.

14. Système de direction selon l'une au moins des revendications 1 à 8, **caractérisé en ce que**, pour le réglage de la distance entre les axes de la vis sans fin (43) et de la vis sans fin (45) de l'actionneur de la direction à superposition et/ou pour l'introduction de vibrations, au moins un élément de positionnement (49) est associé au boîtier (42, 44) dans lequel sont montés la vis sans fin (43) et la vis sans fin (45).

15. Système de direction selon la revendication 14, **caractérisé en ce qu'**il est prévu un actionneur piézoélectrique à titre d'élément de positionnement (49).
